# EUROPEAN PATENT APPLICATION

(11) **EP 3 934 295 A2**
(43) Date of publication of application: **05.01.2022**
(21) Application number: 21200458.4
(22) Date of filing: 01.10.2021
(51) Int. Cl.: H04W 12/041, H04W 12/0431

(54) **KEY PROTECTION PROCESSING METHOD, APPARATUS, DEVICE AND STORAGE MEDIUM**

(30) Priority: 30.11.2020 CN 202011376585
(71) Applicant: BEIJING BAIDU NETCOM SCIENCE TECHNOLOGY CO., LTD., No.10 Shangdi 10th Street Haidian District Beijing 100085 (CN)
(72) Inventor: CHEN, Zhaolong, Beijing (CN)
(74) Representative: Studio Torta S.p.A.

(57) **Abstract**

This application discloses a key protection processing method, apparatus, device and storage medium, which relates to data security and data transmission. A specific implementation scheme is: generating a first public key according to a first private key, where the first public key and a second private key are used to generate a first encryption key; sending the first public key to a second electronic device; receiving a second public key from the second electronic device, where the second public key is generated according to the second private key; generating a second encryption key according to the second public key and the first private key, where the first encryption key and the second encryption key are used to process an original key used in data interaction. The first encryption key generated by the second electronic device and the second encryption key generated by the first electronic device are consistent, and then the two electronic devices complete the encryption and decryption of the original key; and the first encryption key and the second encryption key will not be transmitted, and illegal devices will not obtain the secondary encryption keys, ensuring the security of the original key and data.

## Description

### TECHNICAL FIELD

This application relates to data security and data transmission in computer technology, and in particular to a key protection processing method, apparatus, device and storage medium.

### BACKGROUND

In the process of data transmission, in order to ensure that data is not stolen and tampered with, that is, to ensure the security of data transmission, it is often necessary to perform encryption and decryption protection processing on the data. A key can be used to encrypt and decrypt the data, but if the key is cracked, the data will be stolen, tampered with, and so on.

In the prior art, the key may be performed with encryption protection again by using an agreed algorithm to further protect the data. For example, the agreed algorithm is coding processing that represents binary data based on 64 printable characters (BASE64), or a value processing method of a message digest algorithm (MD5 Message-Digest Algorithm).

However, in the prior art, once an illegal device learns the algorithm pre-agreed by a sender and a receiver, it is easy for the illegal device to crack the key according to the agreed algorithm, and then obtain data illegally, and perform illegal processing, such as stealing, tampering, on the data. Therefore, the transmission of the key is still insecure.

### SUMMARY

This application provides a key protection processing method, apparatus, device, and storage medium for ensuring key security and data security.

According to a first aspect of the present application, a key protection processing method is provided, the method is applied to a first electronic device, and the method includes:
generating a first public key according to a pre-stored first private key, where the first public key is used to generate a first encryption key, and the first encryption key is generated according to the first public key and a second private key;
sending the first public key to a second electronic device;
receiving a second public key from the second electronic device, where the second public key is generated according to the second private key;
generating a second encryption key according to the second public key and the first private key; where the first encryption key and the second encryption key are used to process an original key used in data interaction between the first electronic device and the second electronic device.

According to a second aspect of the present application, a key protection processing method is provided, the method is applied to the second electronic device, and the method includes:
receiving a first public key from a first electronic device, where the first public key is generated according to a first private key;
generating a first encryption key according to the first public key and a second private key;
generating a second public key according to the pre-stored second private key, and sending the second public key to the first electronic device; where the second public key is used to generate a second encryption key, the second encryption key is generated according to the second public key and the first private key, and the first encryption key and the second encryption key are used to process an original key used in data interaction between the first electronic device and the second electronic device.

According to a third aspect of the present application, a key protection processing apparatus is provided, the apparatus is applied to a first electronic device, and the apparatus includes:
a first generating unit, configured to generate a first public key according to a pre-stored first private key, where the first public key is used to generate a first encryption key, and the first encryption key is generated according to the first public key and a second private key;
a first sending unit, configured to send the first public key to a second electronic device;
a first receiving unit, configured to receive a second public key from the second electronic device, where the second public key is generated according to a second private key;
a second generating unit, configured to generate a second encryption key according to the second public key and the first private key; where the first encryption key and the second encryption key are used to process an original key used in data interaction between the first electronic device and the second electronic device.

According to a fourth aspect of the present application, a key protection processing apparatus is provided, the apparatus is applied to a second electronic device, and the apparatus includes:
a first receiving unit, configured to receive a first public key from a first electronic device, where the first public key is generated according to a first private key;
a first generating unit, configured to generate a first encryption key according to the first public key and a second private key;
a second generating unit, configured to generate a second public key according to the pre-stored second private key;
a first sending unit, configured to send the second public key to the first electronic device; where the second public key is used to generate a second encryption key, the second encryption key is generated according to the second public key and the first private key; and the first encryption key and the second encryption key are used to process an original key used in data interaction between the first electronic device and the second electronic device.

According to a fifth aspect of the present application, there is provided a first electronic device, including: a processor and a memory; the memory stores executable instructions of the processor; where the processor is configured to perform the key protection processing method according to any one of the first aspect by executing the executable instructions.

According to a sixth aspect of the present application, there is provided a second electronic device, including: a processor and a memory; the memory stores executable instructions of the processor; where the processor is configured to perform the key protection processing method according to any one of the second aspect by executing the executable instructions.

According to a seventh aspect of the present application, there is provided a non-transitory computer-readable storage medium storing computer instructions, and the computer instructions, when executed by a processor, implement the key protection processing method according to any one of the first aspect, or perform the key protection processing method according to the second aspect.

According to an eighth aspect of the present application, a program product is provided, the program product includes: a computer program, the computer program is stored in a readable storage medium, at least one processor of a computer can read the computer program from the readable storage medium, the at least one processor executes the computer program to cause the computer to perform the key protection processing method according to any one of the first aspect, or perform the key protection processing method according to the second aspect.

According to a ninth aspect of the present application, a key protection processing system is provided, the system includes the first electronic device according to the fifth aspect and the second electronic device according to the sixth aspect.

According to the technical solution of this application, both the first encryption key and the second encryption key have correlation with the same data (that is, both have data correlation with the first private key and the second private key), thereby, the first encryption key generated by the second electronic device and the second encryption key generated by the first electronic device are in consistence with each other. Thus, the first electronic device can take the second encryption key as a basis, the second electronic device can take the first encryption key as a basis, the two electronic devices can complete the encryption and decryption of the original key, and both the first electronic device and the second electronic device can obtain the original key; then, the first electronic device and the second electronic device exchange data based on the original key to ensure the security of data transmission. In addition, in the above process, the secondary encryption keys (i.e., the first encryption key and the second encryption key) generated by the two ends will not be transmitted, so that other illegal devices will not obtain the secondary encryption keys, thereby ensuring the security of the original key and data.

It should be understood that the content described in this section is not intended to identify the key or important features of the embodiments of this application, nor is it intended to limit the scope of this application. Other features of this application will be easily understood through the following description.

### BRIEF DESCRIPTION OF DRAWINGS

The accompanying drawings are used for better understanding of the solution and do not constitute a limitation to the application, among them:
FIG. 1 is a schematic diagram according to a first embodiment of the present application;
FIG. 2 is a signaling diagram according to the first embodiment of the present application;
FIG. 3 is a schematic diagram according to a second embodiment of the present application;
FIG. 4 is a schematic diagram according to a third embodiment of the present application;
FIG. 5 is a schematic diagram according to a fourth embodiment of the present application;
FIG. 6 is a schematic diagram according to a fifth embodiment of the present application;
FIG. 7 is a schematic diagram according to a sixth embodiment of the present application;
FIG. 8 is a schematic diagram according to a seventh embodiment of the present application;
FIG. 9 is a schematic diagram according to an eighth embodiment of the present application;
FIG. 10 is a schematic diagram according to a ninth embodiment of the present application;
FIG. 11 is a schematic diagram according to a tenth embodiment of the present application.

### DESCRIPTION OF EMBODIMENTS

The following describes exemplary embodiments of the present application with reference to the accompanying drawings, which include various details of the embodiments of the present application to facilitate understanding, and should be considered as merely exemplary. Therefore, those of ordinary skill in the art should realize that various changes and modifications may be made to the embodiments described herein without departing from the scope of the present application. Also, for clarity and conciseness, descriptions of well-known functions and structures are omitted in the following description.

In the Internet, especially the mobile internet, data security and privacy are very important, and for data security considerations and user information privacy considerations, it is necessary to encrypt data generated on the Internet. Therefore, in the process of data transmission, in order to ensure that the data is not stolen and tampered with, that is, to ensure the security of data transmission, it is often necessary to perform encryption and decryption protection processing on the data.

In an example, an asymmetric encryption algorithm can be used to encrypt and decrypt data. In another example, a symmetric encryption algorithm can be used to encrypt and decrypt data. The symmetric encryption algorithm includes, for example, a data encryption standard (DES for short) algorithm, a Triple DES (3DES for short) algorithm, an advanced encryption standard (AES for short) algorithm, a block cipher standard (SM4) algorithm, etc.

When using an encryption algorithm to encrypt and decrypt data, a fixed key is needed to perform encryption and decryption protection processing on the data. If the key is cracked, the data will be stolen, tampered with, etc., if the security of the key needs to be ensured.

In an example, the key can be performed with encryption protection again by using an agreed algorithm to further protect the data. For example, the agreed algorithm is BASE64 encoding processing, that is, performing encoding processing on the original key with BASE64, and the encoded value is used as the key; or the agreed algorithm is the MD5 value processing method, that is, the MD5 value is calculated for the original key, and the obtained MD5 value is used as the key; or, the original key is encrypted again, and the key is sent in cipher text to the opposite end.

However, in the above method, once an illegal device learns the algorithm pre-agreed by the sender and the receiver, the illegal device can easily crack the key according to the agreed algorithm, and then illegally obtain data, and perform illegal processing, such as stealing, tampering, on the data. Therefore, the transmission of the key is still insecure.

This application provides a key protection processing method, apparatus, device, and storage medium, which are applied to data security and data transmission in computer technology to ensure key security and data security.

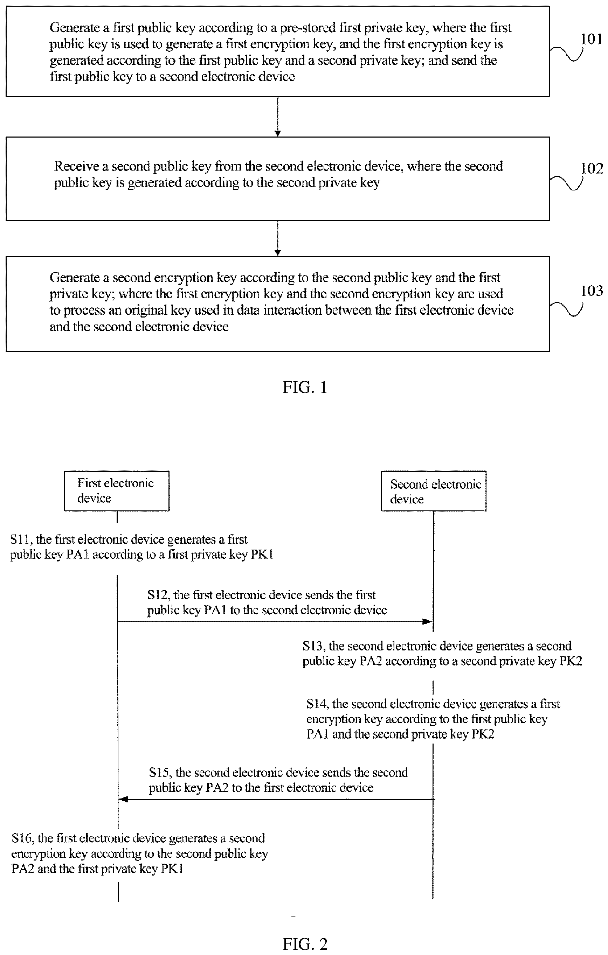

FIG. 1 is a schematic diagram according to a first embodiment of the present application. As shown in FIG. 1, the key protection processing method provided by this embodiment includes:
101. Generate a first public key according to a pre-stored first private key, where the first public key is used to generate a first encryption key, and the first encryption key is generated according to the first public key and a second private key; and send the first public key to a second electronic device.

Illustratively, the executive entity of this embodiment may be a first electronic device, where the first electronic device may be a terminal device, or a server, or other apparatuses or devices that can execute the method of this embodiment.

When data needs to be transmitted between the first electronic device and the second electronic device, a key needs to be used to encrypt the data, and in order to protect the key, the process of this embodiment can be used to protect the key.

The first electronic device can generate the first private key PK1, where the first private key PK1 may be randomly generated, or the first private key PK1 is a fixed private key. Then, the first electronic device generates the first public key PA1 according to the first private key PK1.

The first electronic device sends the generated first public key PA1 to the second electronic device, but the first electronic device does not send the first private key PK1 to the second electronic device.

The second electronic device may generate a second private key PK2, where the second private key PK2 may be randomly generated, or the second private key PK2 is a fixed private key. Then, the second electronic device generates a second public key PA2 according to the second private key PK2. After the second electronic device receives the first public key PA1 sent by the first electronic device, the second electronic device can generate a secondary encryption key according to the first public key PA1 sent by the first electronic device and the second private key PK2 generated by the second electronic device, that is, generate the first encryption key. In an example, by using a known key generation algorithm, the second electronic device can generate the first encryption key according to the first public key PA1 sent by the opposite end and the second private key PK2 generated by itself. It can be seen that the first public key PA1 is used to generate the first encryption key.

102. Receive a second public key from the second electronic device, where the second public key is generated according to the second private key.

Illustratively, since the second electronic device can generate the second public key PA2 according to the second private key PK2 generated by itself, the second electronic device can send the generated second public key PA2 to the first electronic device, but the second electronic device will not send the second private key PK2 to the first electronic device.

103. Generate a second encryption key according to the second public key and the first private key; where the first encryption key and the second encryption key are used to process an original key used in data interaction between the first electronic device and the second electronic device.

Illustratively, after the first electronic device receives the second public key PA2 sent by the second electronic device, the first electronic device can generate a secondary encryption key according to the second public key PA2 sent by the second electronic device and the first private key PK1 generated by the first electronic device, that is, generates a second encryption key. In an example, by using a known key generation algorithm, the first electronic device can generate the second encryption key according to the second public key PA2 sent by the opposite end and the first private key PK1 generated by itself. It can be seen that the second public key PA2 is used to generate the second encryption key.

The first electronic device generates the second encryption key, and the second electronic device generates the first encryption key, and both the second encryption key and the first encryption key are used as secondary encryption keys.

In the above manner, the second electronic device generates the first encryption key according to the first public key PA1 sent by the first electronic device and the second private key PK2 generated by the second electronic device; the first electronic device generates the second encryption key according to the second public key PA2 sent by the second electronic device and the first private key PK1 generated by the first electronic device. The first public key PA1 is generated according to the first private key PK1, that is, there is data correlation between the first public key PA1 and the first private key PK1. The second public key PA2 is generated according to the second private key PK2, that is, there is data correlation between the second public key PA2 and the second private key PK2. Therefore, for the first encryption key generated according to the first public key PA1 and the second private key PK2, since there is data correlation between the first public key PA1 and the first private key PK1, then the first encryption key has data correlation with the first private key PK1 and the second private key PK2. For the second encryption key generated according to the second public key PA2 and the first private key PK1, since there is data correlation between the second public key PA2 and the second private key PK2, the second encryption key has data correlation with the first private key PK1 and the second private key PK2. Based on the above analysis, it can be seen that both the first encryption key and the second encryption key have correlation with the same data (that is, both have data correlation with the first private key PK1 and the second private key PK2), and thus, the first encryption key generated by the second electronic device and the second encryption key generated by the first electronic device are consistent with each other.

During data transmission between the first electronic device and the second electronic device, the first electronic device can use the second encryption key to encrypt the original key, and send the encrypted original key to the second electronic device. Since the first encryption key and the second encryption key are consistent with each other, the second electronic device can decrypt the encrypted original key according to the first encryption key, and then the second electronic device can obtain the original key. It can be seen that both the first electronic device and the second electronic device have obtained the original key. Then, the first electronic device and the second electronic device exchange data based on the original key.

Also, in the above process, the second electronic device generates the first encryption key, but the second electronic device does not transmit the generated first encryption key to the first electronic device, that is, the first encryption key will not be transmitted on the network, and the first encryption key will not be transmitted to other devices through other media. At the same time, the first electronic device generates the second encryption key, but the first electronic device does not transmit the generated second encryption key to the second electronic device, that is, the second encryption key will not be transmitted on the network and the second encryption key will not be transmitted to other devices through other media. Furthermore, the secondary encryption keys (i.e., the first encryption key and the second encryption key) generated by the two ends will not be transmitted, and thus other illegal devices will not obtain the secondary encryption keys. After the original key is encrypted by the secondary encryption key, since the illegal device cannot obtain the secondary encryption keys, the illegal device cannot crack the original key, and therefore cannot obtain the data encrypted by the original key (that is, cannot obtain the data transmitted between the first electronic device and the second electronic device).

In an example, FIG. 2 is a signaling diagram according to the first embodiment of the present application. As shown in FIG. 2, the method provided in this embodiment includes the following steps: S11, the first electronic device generates a first public key PA1 according to a first private key PK1; S12, the first electronic device sends the first public key PA1 to the second electronic device; S13, the second electronic device generates a second public key PA2 according to a second private key PK2; S14, the second electronic device generates a first encryption key according to the first public key PA1 and the second private key PK2; S15, the second electronic device sends the second public key PA2 to the first electronic device; S16, the first electronic device generates a second encryption key according to the second public key PA2 and the first private key PK1.

In this embodiment, the second electronic device generates the first encryption key according to the first public key sent by the first electronic device and the second private key generated by the second electronic device; and the first electronic device generates the second encryption key according to the second public key sent by the second electronic device and the first private key generated by the first electronic device. For the first encryption key generated according to the first public key and the second private key, since there is data correlation between the first public key and the first private key, then the first encryption key has data correlation with the first private key and the second private key. For the second encryption key generated according to the second public key and the first private key, since there is data correlation between the second public key and the second private key, then the second encryption key has data correlation with the first private key and the second private key. Based on the above analysis, it can be known that both the first encryption key and the second encryption key have correlation with the same data (that is, both have data correlation with the first private key and the second private key), and therefore the first encryption key generated by the second electronic device and the second encryption key generated by the first electronic device are consistent with each other. Thus, the first electronic device can take the second encryption key as a basis, and the second electronic device can take the first encryption key as a basis, and the two electronic devices can complete the encryption and decryption of the original key, and both the first electronic device and the second electronic device can obtain the original key. Then, the first electronic device and the second electronic device perform data interaction based on the original key to ensure the security of data transmission. In addition, in the above process, the secondary encryption keys (i.e., the first encryption key and the second encryption key) generated by the two ends will not be transmitted, and therefore other illegal devices will not obtain the secondary encryption keys; after the original key is encrypted by the secondary encryption key, since illegal devices cannot obtain the secondary encryption keys (that is, it is ensured that the secondary encryption key will not be obtained by illegal devices), the illegal devices cannot crack the original key, and then cannot obtain the data encrypted by the original key (that is, the data transmitted between the first electronic device and the second electronic device cannot be obtained).

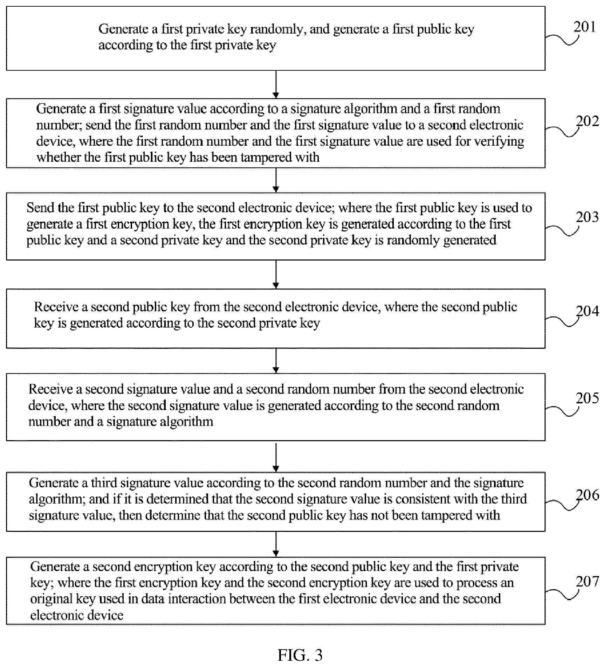

FIG. 3 is a schematic diagram according to a second embodiment of the present application. As shown in FIG. 3, the key protection processing method provided by this embodiment includes:
201. Generate a first private key randomly, and generate a first public key according to the first private key.

In an example, step 201 specifically includes: randomly generating the first private key; generating a first parameter and a second parameter, and sending the first parameter and the second parameter to a second electronic device; generating the first public key according to the first private key, the first parameter and the second parameter; where the first public key represents a logical relationship between the first private key, the first parameter and the second parameter, and a second public key represents a logical relationship between a second private key, the first parameter and the second parameter.

In an example, the first private key and the first public key are in a bilinear pairing form with each other; the second private key and the second public key are in a bilinear pairing form with each other.

Illustratively, the executive entity of this embodiment may be the first electronic device, where the first electronic device may be a terminal device, or a server, or other apparatuses or devices that can execute the method of this embodiment.

When data needs to be transmitted between the first electronic device and the second electronic device, a key needs to be used to encrypt the data, and in order to protect the key, the process of this embodiment can be used to protect the key. In an example, each time data interaction between the first electronic device and the second electronic device is performed, the solution of this embodiment may be executed once to generate the secondary encryption keys.

The first electronic device may randomly generate the first private key PK1; then, the first electronic device generates the first public key PA1 according to the randomly generated first private key PK1. Each time data interaction between the first electronic device and the second electronic device is performed, the first electronic device may randomly generate a first private key PK1, and then generate a first public key PK1 according to the randomly generated first private key PK1; therefore, the first private key PK1 generated is different each time, and then the first public key PA1 generated is different each time, ensuring that when the first electronic device generates the second encryption key each time, the generated second encryption key (that is, the secondary encryption key) is different, which can further ensure the security of data transmission. In addition, the first private key PK1 generated by the first electronic device and the second private key PK2 generated by the second electronic device are all randomly generated and will not be transmitted, which further ensures that the secondary encryption keys generated by the two ends will not be reverse-calculated and will not be stolen, thus ensuring the security of the original key and data.

In an example, the first electronic device may use a DH key exchange algorithm to process the second public key PA2 and the first private key PK1 to generate the second encryption key. The second electronic device may use the DH key exchange algorithm to process the first public key PA1 and the second private key PK2 to generate the first encryption key.

In an example, when the first electronic device generates the first public key according to the first private key, the generated first public key and the first private key are in a bilinear pairing form with each other, where the bilinear pairing form can guarantee the encryption of the first public key. When the second electronic device generates the second public key according to the second private key, the generated second public key and the second private key are in a bilinear pairing form with each other, where the bilinear pairing form can guarantee the encryption of the second public key.

In an example, the first electronic device generates a first parameter G and a second parameter P, and sends the generated first parameter G and the second parameter P to the second electronic device; and the first electronic device randomly generates a first parameter key PK1. In addition, the first electronic device generates a first public key PA1 according to the first private key PK1, and the first parameter G and the second parameter P. It can be seen that the first public key PA1 is related to the first private key PK1, the first parameter G and the second parameter P, that is, the first public key PA1 represents a logical relationship between the first private key PK1, the first parameter G and the second parameter P.

In addition, the first electronic device sends the generated first public key PA1 to the second electronic device, but the first electronic device does not send the first private key PK1 to the second electronic device.

202. Generate a first signature value according to a signature algorithm and a first random number; and send the first random number and the first signature value to the second electronic device, where the first random number and the first signature value are used for verifying whether the first public key has been tampered with.

Illustratively, when the first electronic device sends the first public key PA1 to the second electronic device, it may also randomly generate a first random number, and then the first electronic device may generate a first signature value according to a signature algorithm and the first random number; and the first electronic device sends the generated first random number and the first signature value to the second electronic device.

203. Send the first public key to the second electronic device; where the first public key is used to generate a first encryption key, the first encryption key is generated according to the first public key and a second private key, and the second private key is randomly generated.

In an example, the first encryption key is generated according to the first public key, the second private key and the second parameter.

Illustratively, it can be seen according to step 202 that the first electronic device can send the first random number, the first signature value and the first public key to the second electronic device. The second electronic device first generates a sixth signature value according to the first random number; then, the second electronic device determines whether the sixth signature value is consistent with the received first signature value; if the second electronic device determines that the sixth signature value is consistent with the first signature value, then it is determined that the first public key PA1 has not been tampered with during transmission; if the second electronic device determines that the sixth signature value is inconsistent with the first signature value, then it is determined that the first public key PA1 has been tampered with during transmission, and the second electronic device may inform the first electronic device that the first public key PA1 has been tampered with, and request the first electronic device to re-send the first public key PA1. Furthermore, according to the first random number and the first signature value, whether the first public key PA1 has been tampered with is verified, so as to ensure the security of the secondary encryption key.

If the second electronic device determines that the first public key PA1 has not been tampered with during transmission, the second electronic device randomly generates the second private key PK2; the second electronic device may receive the first parameter G and the second parameter G sent by the first electronic device, and then the second electronic device generates a second public key PA2 according to the second private key PK2, and the received first parameter G and second parameter P; it can be seen that the second public key PA2 is related to the second private key PK2, the first parameter G and the second parameter P, that is, the second public key PA2 represents a logical relationship between the second private key PK2, the first parameter G and the second parameter P. Then, the second electronic device may send the generated second public key PA2 to the first electronic device, but the second electronic device will not send the second private key PK2 to the first electronic device.

In addition, the second electronic device may generate a secondary encryption key according to the first public key PA1 sent by the first electronic device and the second private key PK2 generated by the second electronic device, that is, generate the first encryption key. In an example, the second electronic device may generate the first encryption key according to the first public key PA1 and the second parameter P sent by the first electronic device, and the second private key PK2 generated by the second electronic device.

Each time the data interaction between the first electronic device and the second electronic device is performed, the second electronic device may randomly generate a second private key PK2, then generate a second public key PA2 according to the randomly generated second private key PK2. Thus, the second private key PK2 generated each time is different, then the second public key PA2 generated each time is different, ensuring that when the second electronic device generates the first encryption key each time, the generated first encryption key (that is, the secondary encryption key) is different, which can further ensure the security of data transmission.

204. Receive a second public key from the second electronic device, where the second public key is generated according to the second private key.

Illustratively, according to step 203, it can be known that the first device can receive the second public key PA2 sent by the first electronic device.

205. Receive a second signature value and a second random number from the second electronic device, where the second signature value is generated according to the second random number and a signature algorithm.

Illustratively, before the second electronic device feeds back the second public key PA2 to the first electronic device, the second electronic device randomly generates a second random number, and the second electronic device generates a second signature value according to the signature algorithm and the second random number value. Then, the second electronic device may send the second signature value, the second random number and the second public key PA2 to the first electronic device.

206. Generate a third signature value according to the second random number and the signature algorithm; and if it is determined that the second signature value is consistent with the third signature value, then determine that the second public key has not been tampered with.

Illustratively, after receiving the second random number, the first electronic device generates a third signature value according to the second random number and the signature algorithm; the first electronic device verifies the consistency between the received second signature value and the third signature value generated by itself; if the first electronic device determines that the second signature value is consistent with the third signature value, then it determines that the second public key PA2 has not been tampered with during transmission; if the first electronic device determines that the second signature value and the third signature values are inconsistent, then it determines that the second public key PA2 has been tampered with during transmission, and then the first electronic device re-requests the second electronic device for the second public key PA2. Furthermore, according to the second signature value and the second random number, whether the second public key PA2 has been tampered with is verified, so as to ensure the security of the secondary encryption key.

207. Generate a second encryption key according to the second public key and the first private key; where the first encryption key and the second encryption key are used to process an original key used in data interaction between the first electronic device and the second electronic device.

In an example, step 207 specifically includes: generating the second encryption key according to the second public key, the first private key and the second parameter.

Illustratively, if the first electronic device determines that the second public key PA2 has not been tampered with during transmission, then it generates a secondary encryption key according to the second public key PA2 sent by the second electronic device and the first private key PK1 generated by the first electronic device, that is, generate the second encryption key. In an example, since the second parameter P is generated by the first electronic device, the first electronic device may generate the second encryption key according to the second public key PA2, the first private key PK1 and the second parameter P.

In the above manner, the first electronic device generates the first public key PA1 according to the first private key PK1, the first parameter G and the second parameter P, and it can be seen that the first public key PA1 is related to the first private key PK1, the first parameter G and the second parameter P (that is, the first public key PA1 represents a logical relationship between the first private key PK1, the first parameter G and the second parameter P). The second electronic device generates the second public key PA2 according to the second private key PK2, the first parameter G and the second parameter P; and it can be seen that the second public key PA2 is related to the second private key PK2, the first parameter G and the second parameter G (that is, the second public key PA2 represents a logical relationship between the second private key PK2, the first parameter G and the second parameter P).

In addition, the first electronic device generates the second encryption key according to the second public key PA2, the first private key PK1 and the second parameter P; then, the second encryption key is related to the second private key PK2, the first private key PK1, the first parameter G, the second parameter P. The second electronic device generates the first encryption key according to the second private key PK2, the first public key PA1 and the second parameter P; then, the first encryption key is related to the second private key PK2, the first private key PK1, the first parameter G and the second parameter P.

Based on the above analysis, it can be known that both the first encryption key and the second encryption key are related to the same data (that is, both have data correlation with the second private key PK2, the first private key PK1, the first parameter G and the second parameter P), and thus the first encryption key generated by the second electronic device and the second encryption key generated by the first electronic device are consistent with each other. The first encryption key and the second encryption key will not be transmitted, the second electronic device saves the first encryption key, and the first electronic device saves the second encryption key, and only when the first encryption key and the second encryption key are consistent, can it be ensured that the first electronic device and the second electronic device can obtain the same original key.

When data is transmitted between the first electronic device and the second electronic device, the first electronic device can use the second encryption key to encrypt the original key, and send the encrypted original key to the second electronic device. Since the first encryption key and the second encryption key are consistent, the second electronic device can decrypt the encrypted original key according to the first encryption key, then the second electronic device can obtain the original key. It can be seen that both the first electronic device and the second electronic device obtain the original key. Then, the first electronic device and the second electronic device perform data interaction based on the original key.

In an example, the first electronic device is a self-service terminal device, and the second electronic device is a server. The solution provided in this embodiment can be applied to the interaction between the self-service terminal device and the serve. Before the self-service terminal device and the server exchange data, the solution of this embodiment can be executed to generate the first encryption key and the second encryption key. For example, the self-service terminal device is an appointment registration device, or a social server device, or a bank terminal. The data exchanged between these terminals and the server requires high confidentiality, then the solution of this embodiment can be used to obtain a secondary encryption key that will not be stolen by illegal devices.

For example, in this embodiment, the process of generating secondary encryption keys (first encryption key, second encryption key) is the following process, where the sender is the first electronic device, and the receiver is the second electronic device:
Step 1. The sender sends two prime numbers G and P (i.e., the first parameter G and the second parameter P) to the receiver.
Step 2. The sender generates a random number A, and uses the random number A as the first private key PK1 (that is, A=private key PK1).
Step 3. The receiver generates a random number B, and uses the random number B as the second private key PK2 (that is, B=private key PK2).
Step 4. The sender generates a first public key *PA1* = *G^{A}* mod P = *G*^{*PK*1} mod P according to the first private key PK1 generated by itself; the sender sends the first public key *PA*1 = *G^{A}* mod P = *G*^{*PK*1} mod P to the receiver.
Step 5. The receiver generates a second public key *PA2* = *G^{B}* mod P = *G*^{*PK*2} mod P according to the second private key PK2; the receiver sends the second public key *PA*2 = *G^{B}* mod P = *G^{PK2}* mod P to the sender.
Step 6. The sender uses the second public key *PA*2 = *G^{B}* mod P = *G*^{*PK*2} mod P sent by the receiver to calculate the A-th power and finds modP, that is, the sender calculates a second encryption key according to the second public key PA2 and the first private key A=PK1; the sender obtains the second encryption key as (*G^{B}* mod P)*^{A}* mod P = (*G*^{*PK*2} mod P)^{*PK*1} mod P, that is, (*G*^{*PK*2} mod P)^{*PK*1} mod P = *PA*2^{*PK*1} mod P.
   The first encryption key (that is, the secondary encryption key) calculated by the sender can be simplified as *G*^{*PK*2**PK*1} *mod* P = *G*^{*PK*1**PK*2} *mod* P.
Step 7. The receiver uses the first public key *PA*1 = *G^{A}* mod P = *G*^{*PK*1} mod P sent by the sender to calculates the B-th power and finds modP, that is, the receiver calculates a first encryption key according to the first public key PA1, the second private key B=PK2; the receiver obtains the first encryption key as (*G^{A}* mod P)*^{B}* mod P = (*G*^{*PK*1} mod P)^{*PK*2} mod P, that is (*G*^{*PK*1} mod P)^{*PK*2} mod P = *PA*l^{*PK*2} modP.

The second encryption key (that is, the secondary encryption key) calculated by the receiver can be simplified as *G*^{*PK*1*PK2} *mod* P.

According to the above example, it can be known that the first encryption key and the second encryption key obtained in this embodiment are consistent.

It should be noted that steps 6 and 7 are used to explain why the secondary encryption keys generated at the two ends are consistent (that is, the first encryption key and the second encryption key are consistent), and the first private key PK1 and the second private key PK2 cannot be transferred.

In this embodiment, the first electronic device generates the first public key according to the first private key, the first parameter and the second parameter; the second electronic device generates the second public key according to the second private key, the first parameter and the second parameter; the first electronic device generates the second encryption key according to the second public key, the first private key and the second parameter, and the second electronic device generates the first encryption key according to the second private key, the first public key and the second parameter; thus, the first encryption key and the second encryption key both are related to the same data (that is, both have data correlation with the second private key, the first private key, the first parameter and the second parameter), so that the first encryption key generated by the second electronic device and the second encryption key generated by the first electronic device are consistent; the first electronic device can take the second encryption key as a basis, the second electronic device takes the first encryption key as the basis, the two electronic devices complete the encryption and decryption of the original key, and both the first electronic device and the second electronic device obtain the original key; then, the first electronic device and the second electronic device exchanges data based on the original key to ensure the security of data transmission. In addition, in the above process, the secondary encryption keys (i.e., the first encryption key and the second encryption key) generated by the two ends will not be transmitted, and thus, other illegal devices will not obtain the secondary encryption keys, thereby further ensuring the security of the original key and data.

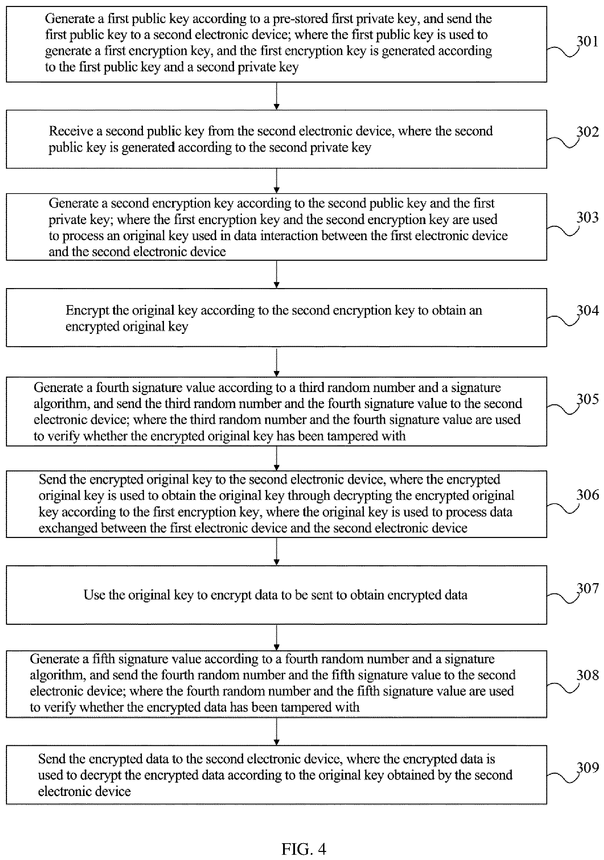

FIG. 4 is a schematic diagram of a third embodiment according to the present application. As shown in FIG. 4, the key protection processing method provided by this embodiment includes:
301. Generate a first public key according to a pre-stored first private key, and send the first public key to a second electronic device; where the first public key is used to generate a first encryption key, and the first encryption key is generated according to the first public key and a second private key.
302. Receive a second public key from the second electronic device, where the second public key is generated according to the second private key.
303. Generate a second encryption key according to the second public key and the first private key; where the first encryption key and the second encryption key are used to process an original key used in data interaction between the first electronic device and the second electronic device.
   Illustratively, the executive entity of this embodiment can be a first electronic device, where the first electronic device may be a terminal device, or a server, or other apparatuses or devices that can execute the method of this embodiment.
   For steps 301-303 in this embodiment, reference can be made to the introduction of the above embodiments, which are not described herein again.
304. Encrypt the original key according to the second encryption key to obtain the encrypted original key.
   Illustratively, after the first electronic device generates the second encryption key (that is, the secondary encryption key), it uses the second encryption key to encrypt the original key to obtain the encrypted original key, where the encryption algorithm used by the first electronic device is not limited.
305. Generate a fourth signature value according to a third random number and a signature algorithm, and send the third random number and the fourth signature value to the second electronic device; where the third random number and the fourth signature value are used to verify whether the encrypted original key has been tampered with.
   Illustratively, the first electronic device randomly generates the third random number, and generates the fourth signature value according to the third random number and the signature algorithm. While the first electronic device sends the encrypted original key to the second electronic device, it also sends the third random number and the fourth signature value to the second electronic device.
306. Send the encrypted original key to the second electronic device, where the encrypted original key is used to obtain the original key through decrypting the encrypted original key according to the first encryption key, where the original key is used to process the data interaction between the first electronic device and the second electronic device.
   Illustratively, the first electronic device sends the encrypted original key to the second electronic device. The second electronic device also receives the third random number and the fourth signature value, and then the second electronic device generates a seventh signature value according to the received third random number; then, the second electronic device verifies the consistency between the received fourth signature value and the seventh signature value generated by itself; if the second electronic device determines that the fourth signature value is consistent with the seventh signature value, then it determines that the encrypted original key has not been tampered with during transmission; if the second electronic device determines that the fourth signature value and the seventh signature value are inconsistent, it determines that the encrypted original key has been tampered with during the transmission process, and then requests the first electronic device for the encrypted original key again. Therefore, whether the encrypted original key has been tampered with during transmission is verified.
   When the second electronic device determines that the encrypted original key has not been tampered with during transmission, since the second electronic device has already generated the second encryption key (that is, the secondary encryption key), and the first encryption key and the second encryption key are consistent, the second electronic device can decrypt the encrypted original key according to the second encryption key to obtain the original key, where the encryption algorithm used in the second electronic device is not limited.
307. Use the original key to encrypt data to be sent to obtain encrypted data.
   Illustratively, the first electronic device can use the original key to encrypt the data to be sent to obtain the encrypted data, where the encryption algorithm used in the first electronic apparatus is not limited.
308. Generate a fifth signature value according to a fourth random number and a signature algorithm, and send the fourth random number and the fifth signature value to the second electronic device; where the fourth random number and the fifth signature value are used to verify whether the encrypted data has been tampered with.
   Illustratively, the first electronic device can randomly generate the fourth random number, then generates the fifth signature value according to the fourth random number and the signature algorithm; while the first electronic device sends the encrypted data to the second electronic device, the fourth random number and the fifth signature value are sent to the second electronic device.
309. Send the encrypted data to the second electronic device, where the encrypted data is used to decrypt the encrypted data according to the original key obtained by the second electronic device.

Illustratively, after the second electronic device receives the encrypted data sent by the first electronic device, the second electronic device will also receive the fourth random number and the fifth signature value; the second electronic device can generate an eighth signature value according to the fourth random number; the second electronic device verifies the consistency between the received fifth signature value and the eighth signature value generated by itself; if the second electronic device determines that the fifth signature value is consistent with the eighth signature value, it determines that the encrypted data has not been tampered with during the transmission; if the second electronic device determines that the fifth signature value and the eighth signature value are inconsistent, it determines that the encrypted data has been tampered with during the transmission process, and requests the encrypted data again from the first electronic device again.

When the second electronic device determines that the encrypted data has not been tampered with during transmission, since the second electronic device has decrypted and obtained the original key, the second electronic device can perform decryption on the encrypted data according to the original key to obtain the data.

In this embodiment, since the first electronic device generates the second encryption key and the second electronic device generates the first encryption key, the first encryption key and the second encryption key are consistent, then the first electronic device can use the second encryption key to encrypt the original key, and when the second electronic device receives the encrypted original key sent by the first electronic device, the second electronic device can use the first encryption key to decrypt the encrypted original key; then both the first electronic device and the second electronic device can obtain the original key, and the first encryption key and the second encryption key will not be transmitted on the network, and the first encryption key and the second encryption key will not be stolen, ensuring the security of the original key. Further, the first electronic device and the second electronic device can perform data transmission based on the original key, and since the original key is secure, the security of the data transmitted between the first electronic device and the second electronic device can also be further ensured.

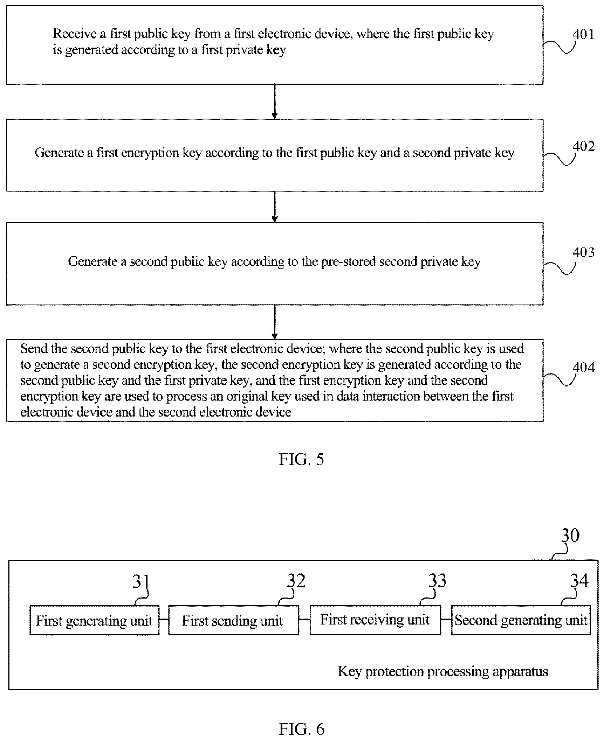

FIG. 5 is a schematic diagram of a fourth embodiment according to the present application. As shown in FIG. 5, the key protection processing method provided by this embodiment includes:
401. Receive a first public key from a first electronic device, where the first public key is generated according to a first private key.
402. Generate a first encryption key according to the first public key and a second private key.
403. Generate a second public key according to the pre-stored second private key.
404. Send a second public key to the first electronic device; where the second public key is used to generate a second encryption key, the second encryption key is generated according to the second public key and the first private key, and the first encryption key and the second encryption key are used to process an original key used in data interaction between the first electronic device and the second electronic device.

In an example, step 403 includes: randomly generating the second private key, and generating the second public key according to the second private key; where the first private key is randomly generated.

In an example, step 402 includes: receiving a first parameter and a second parameter from the first electronic device; generating the first encryption key according to the first public key, the second private key and the second parameter; where the second encryption key is generated according to the second public key, the first private key and the second parameter;

Then step 403 specifically includes: generating a second public key according to the second private key, the first parameter and the second parameter; where the second public key represents a logical relationship between the second private key, the first parameter and the second parameter, and the first public key represents a logical relationship between the first private key, the first parameter and the second parameter.

In an example, the first private key and the first public key are in a bilinear pairing form with each other; the second private key and the second public key are in the bilinear pairing form with each other.

In an example, the method provided in this embodiment further includes: before the first encryption key is generated according to the first public key and the second private key, receiving a first random number and a first signature value from the first electronic device, where the first signature value is generated according to a signature algorithm and the first random number. After step 401, the method further includes: generating a sixth signature value according to the first random number; if it is determined that the first signature value is consistent with the sixth signature value, determining that the first public key has not been tampered with.

In an example, the method provided in this embodiment further includes: generating a second signature value according to a signature algorithm and a second random number, and sending the second signature value and the second random number to the first electronic device; wherein the second random number and the second signature value are used to verify whether the second public key has been tampered with.

In an example, the first electronic device is a self-service terminal device, and the second electronic device is a server.

In an example, after step 404, the method further includes: receiving an encrypted original key from the first electronic device, where the encrypted original key is obtained by encrypting the original key according to the second encryption key; decrypting the encrypted original key according to the first encryption key to obtain the original key, where the original key is used to process data interaction between the first electronic device and the second electronic device.

In an example, the method provided in this embodiment further includes: receiving a third random number and a fourth signature value from the first electronic device, where the fourth signature value is generated according to the third random number and a signature algorithm; generating a seventh signature value according to the third random number; if it is determined that the fourth signature value is consistent with the seventh signature value, determining that the encrypted original key has not been tampered with.

In an example, after decrypting the encrypted original key according to the first encryption key to obtain the original key, the method further includes: receiving encrypted data from the first electronic device, where the encrypted data is obtained by encrypting the data to be sent using the original key; decrypting the encrypted data according to the original key.

In an example, the method provided in this embodiment further includes: receiving a fourth random number and a fifth signature value from the first electronic device, wherein the fifth signature value is generated according to the fourth random number and a signature algorithm; generating an eighth signature value according to the fourth random number; if it is determined that the fifth signature value and the eighth signature value are consistent, determining that the encrypted data has not been tampered with.

Illustratively, the executive entity of this embodiment can be a second electronic device, where the second electronic device may be a terminal device, or a server, or other apparatuses or devices that can execute the method of this embodiment.

The method in this embodiment can implement the technical solutions in the above methods, and the specific implementation process and technical principles thereof are the same, and will not be repeated here.

FIG. 6 is a schematic diagram according to a fifth embodiment of the present application. As shown in FIG. 6, the key protection processing apparatus 30 provided by this embodiment is applied to the first electronic device, and the key protection processing apparatus 30 is applied to the first electronic apparatus, the key protection processing apparatus 30 includes:
a first generating unit 31, configured to generate a first public key according to a pre-stored first private key, where the first public key is used to generate a first encryption key, and the first encryption key is generated based on the first public key and a second private key;
a first sending unit 32, configured to send the first public key to a second electronic device;
a first receiving unit 33, configured to receive a second public key from the second electronic device, where the second public key is generated according to the second private key;
a second generating unit 34, configured to generate a second encryption key according to the second public key and the first private key; where the first encryption key and the second encryption key are used to process an original key used in data interaction between the first electronic device and the second electronic device.

The apparatus of this embodiment can execute the technical solution in the above method, and its specific implementation process and technical principle are the same, and will not be repeated here.

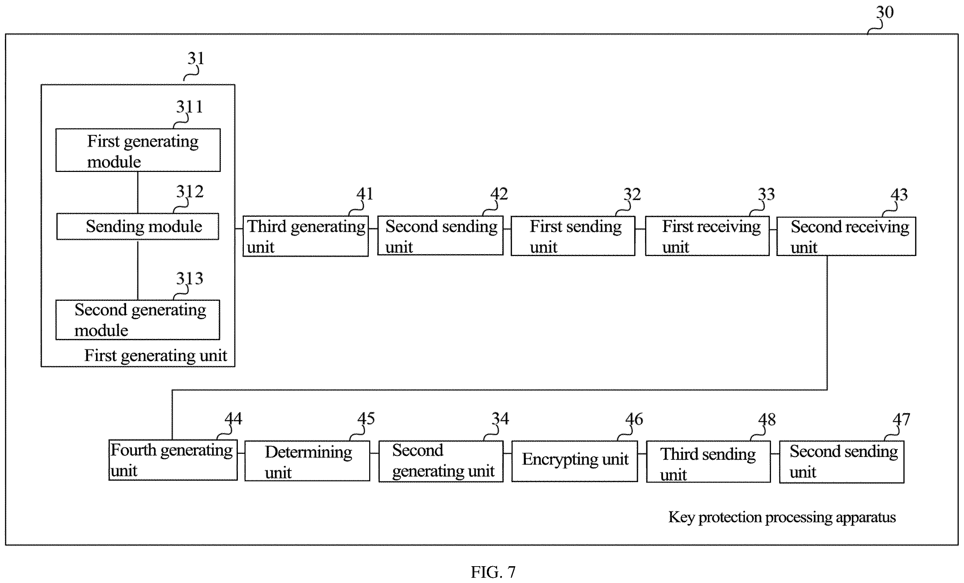

FIG. 7 is a schematic diagram according to a sixth embodiment of the present application. As shown in FIG. 7, the key protection processing apparatus 30 provided in this embodiment is applied to the first electronic device, and based on the embodiment shown in 6, the first generating unit 31 is specifically configured to: randomly generate the first private key, and generate the first public key according to the first private key, where the second private key is randomly generated.

In an example, the first generating unit 31 includes:
a first generating module 311, configured to generate a first parameter and a second parameter;
a sending module 312, configured to send the first parameter and the second parameter to the second electronic device;
a second generating module 313, configured to generate the first public key according to the first private key, the first parameter and the second parameter; where the first public key represents a logical relationship between the first private key, the first parameter and the second the parameter, and the second public key represents a logical relationship between the second private key, the first parameter and the second parameter;
a second generating unit 34, configured to: generate the second encryption key according to the second public key, the first private key and the second parameter; where the first encryption key is generated according to the first public key, the second private key and the second parameter.

In an example, the first private key and the first public key are in a bilinear pairing form with each other; the second private key and the second public key are in the bilinear pairing form with each other.

In an example, the key protection processing apparatus 30 provided in this embodiment further includes:
a third generating unit 41, configured to generate a first signature value according to a signature algorithm and a first random number before the first sending unit 32 sends the first public key to the second electronic device;
a second sending unit 42, configured to send the first random number and the first signature value to the second electronic device, where the first random number and the first signature value are used to verify whether the first public key has been tampered with.

In an example, the key protection processing apparatus 30 provided in this embodiment further includes:
a second receiving unit 43, configured to receive a second signature value and a second random number from the second electronic device before the second generating unit 34 generates the second encryption key according to the second public key and the first private key, where the second signature value is generated according to the second random number and a signature algorithm;
a fourth generating unit 44, configured to generate a third signature value according to the second random number and the signature algorithm;
a determining unit 45, configured to, if it is determined that the second signature value is consistent with the third signature value, determine that the second public key has not been tampered with.

In an example, the first electronic device is a self-service terminal device, and the second electronic device is a server.

In an example, the key protection processing apparatus 30 provided in this embodiment further includes:
an encrypting unit 46, configured to encrypt the original key according to the second encryption key after the second generation unit 34 generates the second encryption key according to the second public key and the first private key, to obtain an encrypted original key; where the encrypted original key is used to obtain the original key through decrypting the encrypted original key according to the first encryption key, where the original key is used to process data exchanged between the first electronic device and the second electronic device;
a second sending unit 47, configured to send the encrypted original key to the second electronic device.

In an example, the key protection processing apparatus 30 provided in this embodiment further includes:
a third sending unit 48, configured to generate a fourth signature value according to a third random number and a signature algorithm, and send the third random number and the fourth signature value to the second electronic device; where the third random number and the fourth signature value is used to verify whether the encrypted original key has been tampered with.

The apparatus of this embodiment can execute the technical solution in the above method, and its specific implementation process and technical principle are the same, and will not be repeated here.

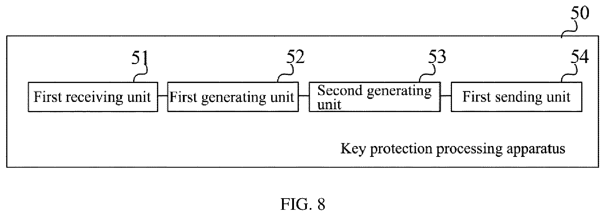

FIG. 8 is a schematic diagram according to a seventh embodiment of the present application. As shown in FIG. 8, the key protection processing apparatus 50 provided in this embodiment is applied to the second electronic device, and the key protection processing apparatus 50 includes:
a first receiving unit 51, configured to receive a first public key from a first electronic device, where the first public key is generated according to a first private key;
a first generating unit 52, configured to generate a first encryption key according to the first public key and a second private key;
a second generating unit 53, configured to generate a second public key according to the pre-stored second private key;
a first sending unit 54, configured to send the second public key to the first electronic device; where the second public key is used to generate a second encryption key, the second encryption key is generated according to the second public key and the first private key; the first encryption key and the second encryption key are used to process an original key used in data interaction between the first electronic device and the second electronic device.

The apparatus of this embodiment can execute the technical solutions in the above methods, and the specific implementation process and technical principles are the same, and will not be repeated here.

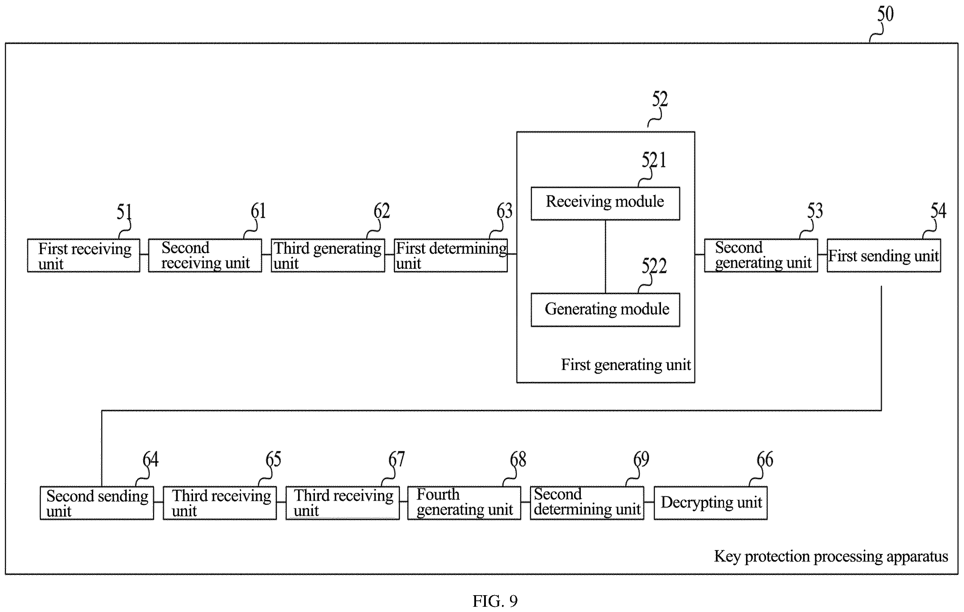

FIG. 9 is a schematic diagram of an eighth embodiment according to the present application. As shown in FIG. 9, the key protection processing apparatus 50 provided in this embodiment is applied to the second electronic device, and based on the embodiment shown in 8, the second generating unit 53 is specifically configured to: randomly generate the second private key, and generate the second public key according to the second private key; where the first private key is randomly generated.

In an example, the first generating unit 52 includes:
a receiving module 521, configured to receive a first parameter and a second parameter from the first electronic device;
a generating module 522, configured to generate the first encryption key according to the first public key, the second private key and the second parameter; where the second encryption key is generated according to the second public key, the first private key and the second parameter;
a second generating unit 53, configured to: generate the second public key according to the second private key, the first parameter and the second parameter; where the second public key represents a logical relationship between the second private key, the first parameter and the second parameters, and the first public key represents a logical relationship between the first private key, the first parameter and the second parameter.

In an example, the first private key and the first public key are in a bilinear pairing form with each other; and the second private key and the second public key are in the bilinear pairing form with each other.

In an example, the key protection processing apparatus 50 provided in this embodiment further includes:
a second receiving unit 61, configured to receive a first random number and a first signature value from the first electronic device before the first generating unit 52 generates the first encryption key according to the first public key and the second private key, where the first signature value is generated according to a signature algorithm and the first random number;
a third generating unit 62, configured to generate a sixth signature value according to the first random number after the first receiving unit receives the first public key from the first electronic device;
a first determining unit 63, configured to determine that the first public key has not been tampered with if it is determined that the first signature value is consistent with the sixth signature value.

In an example, the key protection processing apparatus 50 provided in this embodiment further includes:
a second sending unit 64, configured to generate a second signature value according to a signature algorithm and a second random number, and send the second signature value and the second random number to the first electronic device; where the second random number and the second signature value are used to verify whether the second public key has been tampered with.

In an example, the first electronic device is a self-service terminal device, and the second electronic device is a server.

In an example, the key protection processing apparatus 50 provided in this embodiment further includes:
a third receiving unit 65, configured to receive an encrypted original key from the first electronic device after the first sending unit 54 sends the second public key to the first electronic device, where the encrypted original key is obtained by encrypting the original key according to the second encryption key;
a decrypting unit 66, configured to decrypt the encrypted original key according to the first encryption key to obtain the original key, where the original key is used to process data exchanged between the first electronic device and the second electronic device.

In an example, the key protection processing apparatus 50 provided in this embodiment further includes:
a third receiving unit 67, configured to receive a third random number and a fourth signature value from the first electronic device, where the fourth signature value is generated according to the third random number and a signature algorithm;
a fourth generating unit 68, configured to generate a seventh signature value according to the third random number;
a second determining unit 69, configured to determine that the encrypted original key has not been tampered with if it is determined that the fourth signature value is consistent with the seventh signature value.

The apparatus of this embodiment can execute the technical solution in the above method, and the specific implementation process and technical principle are the same, and will not be repeated here.

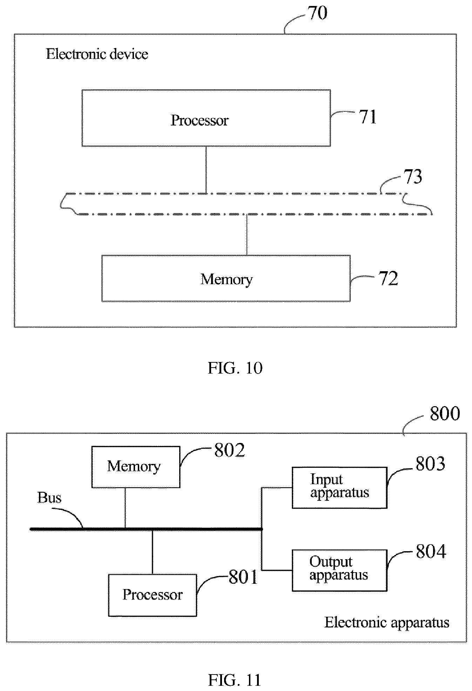

FIG. 10 is a schematic diagram of a ninth embodiment according to the present application. As shown in FIG. 10, the electronic device 70 in this embodiment may include a processor 71 and a memory 72.

The memory 72 is configured to store a program; the memory 72 may include a volatile memory, for example, a random-access memory (abbreviation: RAM), such as a static random access memory (abbreviation: SRAM), a double data rate synchronous dynamic random access memory (abbreviation: DDR SDRAM); the memory may also include a non-volatile memory, for example a flash memory. The memory 72 is configured to store a computer program (such as an application program and functional modules that implement the foregoing methods), computer instructions, and the foregoing computer program, computer instructions, etc. may be partitioned and stored in one or more memories 72. In addition, the above-mentioned computer program, computer instructions, data, etc. may be called by the processor 71.

The above-mentioned computer program, computer instructions, etc. may be partitioned and stored in one or more memories 72. In addition, the above-mentioned computer program, computer data, etc. can be called by the processor 71.

The processor 71 is configured to execute the computer program stored in the memory 72 to implement each step in the method involved in the foregoing embodiments.

For details, please refer to the relevant description in the previous method embodiments.

The processor 71 and the memory 72 may be independent structures, or may be integrated structures integrated together. When the processor 71 and the memory 72 are independent structures, the memory 72 and the processor 71 may be coupled and connected through a bus 73.

The electronic device provided in this embodiment may be the first electronic device or the second electronic device in the foregoing embodiments.

The electronic device of this embodiment can execute the technical solution in the above method, and its specific implementation process and technical principle are the same, and will not be repeated here.

According to an embodiment of the present application, the present application also provides a first electronic device and a readable storage medium.

According to an embodiment of the present application, the present application also provides a second electronic device and a readable storage medium.

FIG. 11 is a schematic diagram according to a tenth embodiment of the present application. As shown in FIG. 11, FIG. 11 is a block diagram for implementing the key protection processing method of the embodiment of the present application. This embodiment provides an electronic device, and the electronic device may be the first electronic device or the second electronic device in the foregoing embodiments. The electronic device is intended to represent various forms of digital computers, such as a laptop computer, a desktop computer, a workstation, a personal digital assistant, a server, a blade server, a mainframe computer, and other suitable computers. The Electronic device may also represent various forms of mobile devices, such as a personal digital assistant, a cellular phone, a smart phone, a wearable device, and other similar computing apparatuses. The components shown herein, their connections and relationships, and their functions are merely examples, and are not intended to limit the implementation of the application described and/or required herein.

As shown in FIG. 11, the electronic device 800 includes: one or more processors 801, a memory 802, and interfaces for connecting various components, including a high-speed interface and a low-speed interface. The various components are connected to each other using different buses, and may be installed on a common motherboard or installed in other ways as needed. The processor can process instructions executed in the electronic device, including instructions stored in or on the memory to display graphical information of a GUI on an external input/output apparatus (such as a display device coupled to an interface). In other embodiments, if necessary, multiple processors and/or multiple buses may be used with multiple memories. Similarly, multiple electronic devices may be connected, and each device provides some necessary operations (for example, as a server array, a group of blade servers, or a multi-processor system). In FIG. 11, one processor 801 is taken as an example.

The memory 802 is the non-transitory computer-readable storage medium provided by this application, where the memory stores instructions that can be executed by at least one processor, so that the at least one processor executes the key protection processing method provided in this application. The non-transitory computer-readable storage medium of the present application stores computer instructions, and the computer instructions are used to cause a computer to execute the key protection processing method provided by the present application.

As a non-transitory computer-readable storage medium, the memory 802 may be used to store non-transitory software programs, non-transitory computer-executable programs, and modules, such as program instructions or modules (for example, the first generating unit 31, the first sending unit 32, the first receiving unit 33, and the second generating unit 34 shown in FIG. 6; or, for example, the first receiving unit 51, the generating unit 52, the second generating unit 53, and the first sending unit 54 shown in FIG. 8) corresponding to the key protection processing method in the embodiments of the present application. The processor 801 executes various functional applications and data processing of a server by running non-transitory software programs, instructions, and modules stored in the memory 802, that is, realizing the key protection processing method in the foregoing method embodiment.

The memory 802 may include a program storage area and a data storage area, where the program storage area may store an operating system and an application program required by at least one function; the data storage area may store data created by use of the electronic apparatus 800 for implementing the key protection processing method, etc. In addition, the memory 802 may include a high-speed random access memory, and may also include a non-transitory memory, such as at least one magnetic disk storage device, a flash memory device, or other non-transitory solid-state storage devices. In some embodiments, the memory 802 may optionally include memories remotely provided with respect to the processor 801, and these remote memories may be connected to the electronic device 800 through a network for implementing the key protection processing method. Examples of the aforementioned networks include, but are not limited to, the Internet, a corporate intranet, a local area network, a mobile communication network, and combinations thereof.

The electronic device 800 for implementing the key protection processing method may further include: an input apparatus 803 and an output apparatus 804. The processor 801, the memory 802, the input apparatus 803, and the output apparatus 804 may be connected by a bus or other methods, and the connection by a bus is taken as an example in FIG. 11.

The input apparatus 803 can receive inputted numeric or character information, and generate key signal input related to user settings and function control of the electronic device 800 used to implement the key protection processing method, such as a touch screen, a keypad, a mouse, a track-pad, a touchpad, a pointing stick, one or more mouse buttons, a trackball, a joystick and other input apparatuses. The output apparatus 804 may include a display device, an auxiliary lighting apparatus (for example, an LED), and a tactile feedback apparatus (for example, a vibration motor), and the like. The display device may include, but is not limited to, a liquid crystal display (LCD), a light emitting diode (LED) display and a plasma display. In some embodiments, the display device may be a touch screen.

Various implementations of the systems and techniques described herein may be implemented in a digital electronic circuit system, an integrated circuit system, application specific ASIC (application specific integrated circuits), computer hardware, firmware, software, and/or combinations thereof. These various implementations may include: being implemented in one or more computer programs, and the one or more computer programs can be executed and/or interpreted on a programmable system including at least one programmable processor, and the programmable processor may be a dedicated or general-purpose programmable processor that can receive data and instructions from a storage system, at least one input apparatus and at least one output apparatus, and transmit data and instructions to the storage system, the at least one input apparatus and the at least one output apparatus.

These computer programs (also called programs, software, software applications, or codes) include machine instructions for a programmable processor, and these computer programs may be implemented by utilizing a high-level procedure and/or object-oriented programming language, and/or an assembly/machine language. As used herein, the terms "machine-readable medium" and "computer-readable medium" refer to any computer program product, device, and/or apparatus used to provide machine instructions and/or data to a programmable processor (for example, a magnetic disk, an optical disk, a memory, a programmable logic device (PLD)), including a machine-readable medium that receives machine instructions as machine-readable signals. The term "machine-readable signal" refers to any signal used to provide machine instructions and/or data to a programmable processor.

In order to provide interaction with a user, the system and technology described here may be implemented on a computer with: a display device for displaying information to the user (for example, a CRT (cathode ray tube) or an LCD (liquid crystal display) monitor); and a keyboard and pointing apparatus (for example, a mouse or a trackball) through which the user can provide input to the computer. Other types of apparatuses may also be used to provide interaction with the user; for example, the feedback provided to the user may be any form of sensory feedback (for example, visual feedback, auditory feedback, or tactile feedback); and input may be received from the user in any form (including acoustic input, voice input, or tactile input).

The system and technology described here may be implemented in a computing system that includes a back-end component (for example, as a data server), or a computing system that includes a middleware component (for example, an application server), or a computing system that includes a front-end component (for example, a user computer with a graphical user interface or a web browser through which a user can interact with the implementation of the system and technology described herein), or a computing system that includes any combination of such background component, intermediate component, or front-end component. The components of the system may be connected to each other through any form or medium of digital data communication (for example, a communication network). Examples of the communication network include: a local area network (LAN), a wide area network (WAN), and the Internet.

The computer system may include a client and a server. The client and server are generally far away from each other and usually interact through a communication network. The relationship between the client and the server is generated by computer programs that run on corresponding computers and have a client-server relationship with each other.

An embodiment of the present application also provides a key protection processing system, which includes the first electronic device and the second electronic device in the foregoing embodiments.

It should be understood that the various forms of processes shown above may be used to reorder, add or delete steps. For example, the steps described in the present application may be executed in parallel, sequentially, or in a different order, as long as the desired result of the technical solution disclosed in the present application can be achieved, which is not limited herein.

The above specific implementations do not constitute a limitation on the scope of protection of this application. Those skilled in the art should understand that various modifications, combinations, sub-combinations and substitutions may be made according to design requirements and other factors. Any modification, equivalent replacement and improvement made within the principle of this application shall be included in the scope of protection of this application.

## Claims

1. A key protection processing method, which is applied to a first electronic device and comprises:
generating (S101) a first public key according to a pre-stored first private key, wherein the first public key is used to generate a first encryption key, and the first encryption key is generated according to the first public key and a second private key;
sending(S101) the first public key to a second electronic device;
receiving (S102) a second public key from the second electronic device, wherein the second public key is generated according to the second private key;
generating (S 103) a second encryption key according to the second public key and the first private key; wherein the first encryption key and the second encryption key are used to process an original key used in data interaction between the first electronic device and the second electronic device.

2. The key protection processing method according to claim 1, wherein the generating the first public key according to the pre-stored first private key comprises:
randomly generating (S201) the first private key, and generating the first public key according to the first private key;
wherein the second private key is randomly generated (S203), and the first private key and the first public key are in a bilinear pairing form with each other; and the second private key and the second public key are in the bilinear pairing form with each other.

3. The key protection processing method according to claim 2, wherein the generating the first public key according to the first private key comprises:
generating a first parameter and a second parameter, and sending the first parameter and the second parameter to the second electronic device;
generating the first public key according to the first private key, the first parameter and the second parameter; wherein the first public key represents a logical relationship between the first private key, the first parameter and the second parameters, and the second public key represents a logical relationship between the second private key, the first parameter and the second parameter;
the generating the second encryption key according to the second public key and the first private key comprises: generating the second encryption key according to the second public key, the first private key and the second parameter; wherein the first encryption key is generated according to the first public key, the second private key and the second parameter.

4. The key protection processing method according to claim 1, wherein before sending the first public key to the second electronic device, the method further comprises:
generating (S202) a first signature value according to a signature algorithm and a first random number;
the method further comprises: sending (S202) the first random number and the first signature value to the second electronic device, wherein the first random number and the first signature value are used to verify whether the first public key has been tampered with.

5. The key protection processing method according to claim 1, wherein before generating the second encryption key according to the second public key and the first private key, the method further comprises:
receiving (S205) a second signature value and a second random number from the second electronic device, wherein the second signature value is generated according to the second random number and a signature algorithm;
generating (S206) a third signature value according to the second random number and the signature algorithm;
if it is determined that the second signature value is consistent with the third signature value, determining (S206) that the second public key has not been tampered with.

6. The key protection processing method according to any one of claims 1-5, wherein the first electronic device is a self-service terminal device, and the second electronic device is a server.

7. The key protection processing method according to any one of claims 1-5, wherein after generating (S207) the second encryption key according to the second public key and the first private key, the method further comprises:
encrypting the original key according to the second encryption key to obtain an encrypted original key; wherein the encrypted original key is used to obtain the original key through decrypting the encrypted original key according to the first encryption key, wherein the original key is used to process data exchanged between the first electronic device and the second electronic device;
sending the encrypted original key to the second electronic device;
wherein the method further comprises:
generating a fourth signature value according to a third random number and a signature algorithm, and sending the third random number and the fourth signature value to the second electronic device;
wherein the third random number and the fourth signature value are used to verify whether the encrypted original key has been tampered with.

8. A key protection processing method, which is applied to a second electronic device and comprises:
receiving (401) a first public key from a first electronic device, wherein the first public key is generated according to a first private key;
generating (402) a first encryption key according to the first public key and a pre-stored second private key;
generating (403) a second public key according to the pre-stored second private key, and sending (404) the second public key to the first electronic device; wherein the second public key is used to generate a second encryption key, the second encryption key is generated according to the second public key and the first private key and the first encryption key and the second encryption key are used to process an original key used in data interaction between the first electronic device and the second electronic device.

9. The key protection processing method according to claim 8, wherein the generating the second public key according to the pre-stored second private key comprises: randomly generating the second private key, and generating the second public key according to the second private key;
wherein the first private key is randomly generated, and the first private key and the first public key are in a bilinear pairing form with each other; the second private key and the second public key are in the bilinear pairing form with each other.

10. The key protection processing method according to claim 9, wherein the generating the first encryption key according to the first public key and the second private key comprises:
receiving a first parameter and a second parameter from the first electronic device;
generating the first encryption key according to the first public key, the second private key and the second parameter; wherein the second encryption key is generated according to the second public key, the first private key and the second parameter;
the generating the second public key according to the pre-stored second private key comprises: generating the second public key according to the second private key, the first parameter and the second parameter; wherein the second public key represents a logical relationship between the second private key, the first parameter and the second parameter, and the first public key represents a logical relationship between the first private key, the first parameter and the second parameter.

11. The key protection processing method according to claim 8, wherein the method further comprises: receiving a first random number and a first signature value from the first electronic device, wherein the first signature value is generated according to a signature algorithm and the first random number;
after receiving the first public key from the first electronic device, the method further includes:
generating a sixth signature value according to the first random number;
if it is determined that the first signature value is consistent with the sixth signature value, determining that the first public key has not been tampered with.

12. The key protection processing method according to claim 8, wherein the method further comprises:
generating a second signature value according to a signature algorithm and a second random number, and sending the second signature value and the second random number to the first electronic device;
wherein the second random number and the second signature value are used to verify whether the second public key has been tampered with.

13. The key protection processing method according to any one of claims 8-12, wherein after sending the second public key to the first electronic device, the method further comprises:
receiving an encrypted original key from the first electronic device, wherein the encrypted original key is obtained by encrypting the original key according to the second encryption key;
decrypting the encrypted original key according to the first encryption key to obtain the original key, wherein the original key is used to process data exchanged between the first electronic device and the second electronic device;
receiving a third random number and a fourth signature value from the first electronic device, wherein the fourth signature value is generated according to the third random number and a signature algorithm;
generating a seventh signature value according to the third random number;
if it is determined that the fourth signature value is consistent with the seventh signature value, determining that the encrypted original key has not been tampered with.

14. A first electronic device, comprising:
at least one processor; and
a memory communicatively connected with the at least one processor; wherein,
the memory stores instructions executable by the at least one processor, and the instructions are executed by the at least one processor to enable the at least one processor to execute the key protection processing method according to any one of claims 1-7.

15. A second electronic device, comprising:
at least one processor; and
a memory communicatively connected with the at least one processor; wherein,
the memory stores instructions executable by the at least one processor, and the instructions are executed by the at least one processor to enable the at least one processor to execute the key protection processing method according to any one of claims 8-13.
